# EUROPEAN PATENT SPECIFICATION

(11) **EP 0 875 769 B1**
(45) Date of publication and mention of the grant of the patent: **04.09.2002**
(21) Application number: 98107834.8
(22) Date of filing: 29.04.1998
(51) Int. Cl.: G01S 5/14, G01C 21/20

(54) **Display control device and method for use in vehicle navigation apparatus**
Anzeigesteuerungsvorrichtung und Verfahren zu deren Verwendung in einem Fahrzeugnavigationsgerät
Dispositif de commande d'affichage et méthode pour sa mise en oeuvre dans un appareil de navigation pour véhicule

(30) Priority: 02.05.1997 JP 11491197
(43) Date of publication of application: 04.11.1998
(73) Proprietor: PIONEER ELECTRONIC CORPORATION, Meguro-ku Tokyo-to (JP)
(72) Inventor: Yano, Kenichiro, c/o Pioneer Elec. Corp., Kawagoe-shi, Saitama-ken (JP); Hayashi, Katsuyoshi, c/o Pioneer Elec. Corp., Kawagoe-shi, Saitama-ken (JP)
(74) Representative: Klingseisen, Franz, Dipl.-Ing.

(56) References cited:
- EP-A- 0 588 082
- EP-A- 0 720 003
- EP-A- 0 747 670
- EP-A- 0 762 362
- US-A- 5 541 592

## Description

The present invention relates to a display control device for use in a vehicle navigation apparatus according to the preamble of claim 1 and a display control method for use in a vehicle navigation apparatus according to the preamble of claim 7.

EP 747 670 A2 discloses a display control device of that kind. This prior art document discloses a display control device in which marks denoting facilities such as restaurants can be displayed. In order to obtain information about the marked facility key switches K5 to K9 have to be pressed. Each of the key switches corresponds to a single operation. As an example pressing K6 leads to an acoustic message, pressing K7 leads to an optical message and pressing K8 leads to written information. In this known device use of key switches corresponding to more than one operation or processing is not provided and therefor every provided operation or processing needs one key switch.

Another device is known from EP 762 362 A2, which discloses a display control device for an automobile, the display means displays an express way and an express way entrance mark, and the preset processing acts the switch between an express way display or a normal route display.

There is known a so-called navigation apparatus serving as a position measurement device for various vehicles such as automobiles, airplanes, and ships. The navigation apparatus displays the map around the current position of the vehicle with the mark indicating the current position of the vehicle, thereby guiding the vehicle to the destination. The navigation apparatus is roughly grouped into a stand-alone type navigation apparatus and a GPS (Global Positioning System) type navigation apparatus. The stand-alone type navigation apparatus calculates the travel direction and the travel distance of the vehicle using the orientation sensor, the speed sensor and the angular velocity sensor installed in the vehicle, and then adds those values to the reference position to calculate the current position of the vehicle. Then, the navigation apparatus displays the map around the current position with the position mark indicating the current position of the vehicle. The GPS type navigation apparatus receives electric waves from plural GPS satellites launched into the space, and calculates the current position of the vehicle from the received electric waves according to the two-dimensional or three-dimensional measurement method. Then, the GPS type navigation apparatus displays the map with the position mark of the current position of the vehicle.

Recently, there is known a so-called hybrid type navigation apparatus which has functions of both the stand-alone type navigation apparatus and the GPS type navigation apparatus. Since the user can recognize the current position of the vehicle in association with the map around the current position with the aid of the navigation apparatus, he can reach the destination without losing his way even if he is driving an unfamiliar area.

The navigation apparatus recently known has an ability to, not only display the map and the current position mark, but to provide various additional information to the user. For example, some navigation apparatuses have a so-called route scroll function to change (scroll) the map along the preset travel route to display the map of the area where the vehicle is scheduled to pass. Another known additional function is a so-called expressway mode function which displays the expressway in a manner distinguished from general roads to inform the user of the condition of the expressway.

However, the conventional navigation apparatus generally requires complicated operation to start those additional functions. Namely, in order to start the route scroll function, the user must open many windows on the display showing the normal map information to make multiple hierarchical selections and/or designations. Specifically, in order start the route scroll function, the user must open the window "Function", and then open the window "Route". Then, the user must select the command "Route Scroll" from many commands such as "Route Deletion", "Route Edit", and the like included in the window "Route". Doing such a complicated manipulation during the driving of the vehicle is not favorable in view of safety.

It is an object of the present invention to provide a display control device and a display control method which simplify the manipulation needed to enable the various functions, thereby improving the convenience of those additional functions in the vehicle navigation apparatus.

This object is achieved by the features of the characterising parts of claims 1 and 7.

According to one aspect of the present invention, there is provided a display control device for use in a vehicle navigation apparatus including: a map display unit for displaying map on a display device; a mark display unit for displaying marks on the map displayed on the display device, the mark being associated with mark information necessary for executing preset processing in a vehicle navigation processing; a designation unit for designating the mark displayed on the display device; and an execution unit for executing the preset processing based on the mark information associated with the mark designated by the designation unit.

In accordance with the display control device thus configured, the map display unit displays map on a display device, and the mark display unit displays marks on the map displayed on the display device. Importantly, the mark is associated with mark information necessary for executing preset processing in a vehicle navigation processing. The designation unit designates the mark displayed on the display device, and the execution unit executes the preset processing based on the mark information associated with the mark designated by the designation unit.

Namely, upon designation of the mark, a specific processing is performed on the basis of the mark information associated with the mark thus designated. Therefore, the manipulation necessary to execute the specific processing may be simplified.

In a preferred embodiment, the mark information may include information to start the preset processing, and the execution unit may start the preset processing upon designation of the mark information. By this, the specific processing can be stated upon designating the mark.

In another preferred embodiment, the mark information may correspond to a plurality of preset processing, and the device may include a selection information display unit for displaying selection information to select one of the plurality of preset processing. The execution unit starts the preset processing selected based on the selection information. Therefore, the selection of the desired processing can be simply and quickly performed.

Preferably, a route display unit may be provided for displaying a route which the vehicle is scheduled to travel on the display device, and the mark information may include information to display the mark on the position on the route and to execute processing associated with the route. By this, the mark is displayed at the position corresponding to the route.

In another preferred embodiment, the vehicle may include an automobile, and the device may further include a expressway displaying unit for displaying an expressway on the display device. In addition, the mark may include an expressway entrance mark indicating an entrance to the expressway and being displayed at the position corresponding to the entrance of the expressway on the map displayed on the display device, and the preset processing corresponding to the expressway entrance mark may include processing to switch an expressway running display showing information of the expressway and a normal road display showing map with normal roads. Hence, the user can readily obtain information relating to the expressway when he is driving near an expressway. Further, the expressway running display may show information associated with the expressway, including at least the name of the expressway and the parking areas and/or the interchanges ahead, without map.

In another preferred embodiment, the designation unit may include a cursor display unit for display a cursor, and a cursor operating unit for moving the cursor on the display and clicking the mark to designate the mark. By this, the driver can designate the mark simply by clicking the mark on the display device.

According to another aspect of the present invention, there is provided a display control method for use in a vehicle navigation apparatus including the steps of: displaying map on a display device; displaying marks on the map displayed on the display device, the mark being associated with mark information necessary for executing preset processing in a vehicle navigation processing; designating the mark displayed on the display device; and executing the preset processing based on the mark information associated with the mark designated by the designating step.

In accordance with the display control method thus configured, map is displayed on a display device, and marks are displayed on the map displayed on the display device. Importantly, the mark is associated with mark information necessary for executing preset processing in a vehicle navigation processing. The mark displayed on the display device is designated, and the preset processing based on the mark information associated with the mark designated by the designation unit is executed.

Namely, upon designation of the mark, a specific processing is performed on the basis of the mark information associated with the mark thus designated. Therefore, the manipulation necessary to execute the specific processing may be simplified.

In a preferred embodiment, the mark information may include information to start the preset processing, and the executing step may start the preset processing upon designation of the mark information. By this, the specific processing can be stated upon designating the mark.

In another preferred embodiment, the mark information may correspond to a plurality of preset processing, and the method may further include the step of displaying selection information to select one of the plurality of preset processing. The executing step starts the preset processing selected based on the selection information. Therefore, the selection of the desired processing can be simply and quickly performed.

The nature, utility, and further features of this invention will be more clearly apparent from the following detailed description with respect to the preferred embodiments of the invention when read in conjunction with the accompanying drawings briefly described below.

### BRIEF DESCRIPTION OF THE DRAWINGS

FIG. 1 is a block diagram showing a schematic configuration of the navigation apparatus according to the present invention;
FIG. 2 is a flowchart showing the operation of the navigation apparatus according to the present invention;
FIG. 3 is an example of normal display in the navigation processing;
FIG. 4 is an example of menu display for mark selection;
FIG. 5 is a diagram showing the data structure including mark information;
FIG. 6A is a diagram showing selection information for selecting intrinsic information and processing information;
FIG. 6B is a diagram showing selection information for selecting processing;
FIG. 7 is an example of display showing character information;
FIG. 8 is an example of display at the time of route scroll processing; and
FIG. 9 is an example of display at the time of expressway mode processing.

### DETAILED DESCRIPTION OF THE PREFERRED EMBODIMENTS

The preferred embodiment of the present invention will now be described below with reference to the attached drawings. The following description is directed to the case where the present invention is applied to a vehicle navigation apparatus for use in an automobile or the like.

### [I] Configuration of Navigation Apparatus:

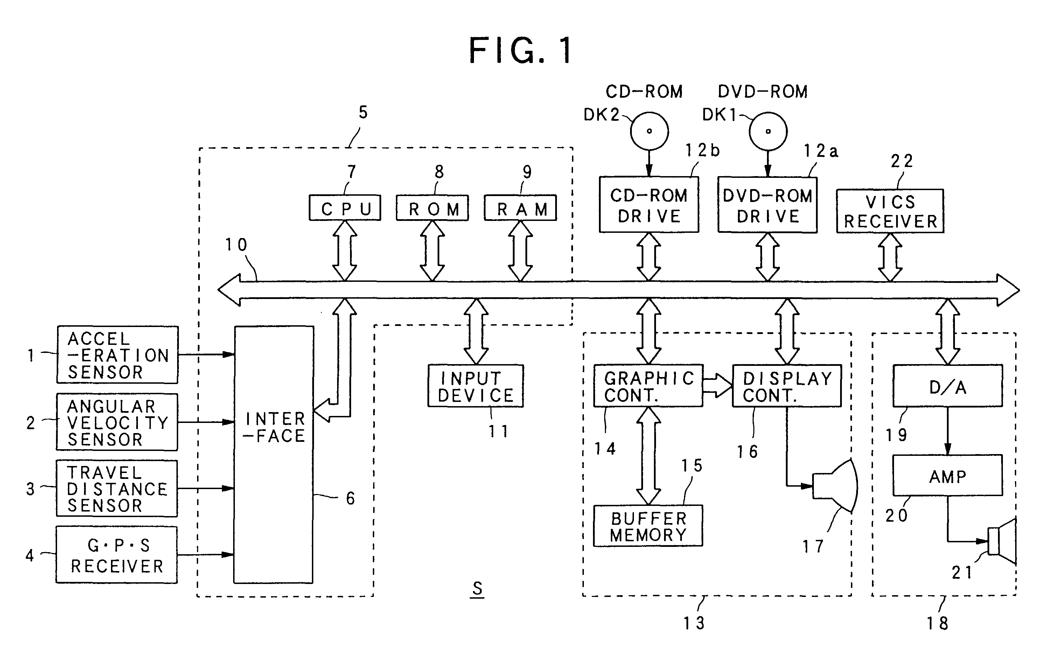

First, the description will be given of the configuration and the basic operation of the navigation apparatus according to the embodiment of the present invention with reference to FIG. 1. As shown in FIG.1, the navigation apparatus S according to the present invention includes the acceleration sensor 1, the angular velocity sensor 2, the travel distance sensor 3 and the GPS receiver 4. The acceleration sensor 1 detects the acceleration of the vehicle in the travelling direction thereof at the time of start, stop, acceleration and deceleration, and outputs the acceleration data. The angular velocity sensor 2 detects the angular velocity of the vehicle at the time of the travelling direction change of the vehicle, and outputs the angular velocity data and the relative orientation data. The travel distance sensor 3 detects the vehicle speed pulse signal corresponding to the rotation of the tires of the vehicle. The GPS receiver 4 receives the electric waves from the GPS satellites to produce the GPS measurement data indicative of the latitude and the longitude of the vehicle. The GPS receiver 4 also outputs the absolute orientation data indicative of the travelling direction of the vehicle.

The navigation apparatus further includes the system controller 5, the input unit 11, the DVD-ROM drive 12a, the CD-ROM drive 12b, the display unit 13, the acoustic playback unit 18 and the VICS (Vehicle Information and Communication System) receiver 22. The system controller 5 receives the acceleration data from the acceleration sensor 1, the angular velocity data from the angular velocity sensor 2, the detection signal of the vehicle speed pulses from the travel distance sensor 3, and the GPS measurement data and the absolute orientation data from the GPS receiver 4, and performs total control of the navigation apparatus S. The input device 11, such as a remote controller, is used to input various data. The DVD-ROM drive 12a and the CD-ROM drive 12b reproduce the DVD-ROM DK1 and the CD-ROM DK2, each carrying map data, under the control by the system controller 5, respectively. The display unit 13 displays various visual data under the control by the system controller 5. The acoustic playback unit 18 reproduces and outputs various audio data under the control by the system controller 5. The VICS receiver 22 receives traffic information based on the VICS recently brought into the practical use.

The system controller 5 includes the interface 6, the CPU 7, the ROM 8 and the RAM 9. The interface 6 enables the data communication with the external sensors such as the GPS receiver 4. The CPU 7 calculates the travel distance of the vehicle by counting the number of the pulses in the detection signal of the vehicle speed pulses. In addition, the CPU 7 totally controls the system controller 5 itself. The ROM 8 serves as a storage medium which stores control programs for controlling the system controller 5. The RAM 9 stores various data, including route data preset by a user using the input device 11, in a rewritable manner. The components in the system controller 5 are connected to the input device 11, the DVD-ROM drive 12a, the CD-ROM drive 12b, the display unit 13, the acoustic playback unit 18 and the VICS receiver 22 via the bus line 10. Further, those components are connected to the sensors 1 to 3 and the GPS receiver 4 via the bus line 10 and the interface 6.

The display unit 13 includes the graphic controller 14, the buffer memory 15, the display controller 16 and the display 17. The graphic controller 14 performs overall control of the display unit 13 based on the control data supplied from the CPU 7 via the bus line 10. The buffer memory 15 such as VRAM (Video RAM) temporarily stores image data to be promptly displayed. The display controller 16 controls the display 17, such as a liquid crystal display or a CRT (Cathode Ray Tube), to display the image data outputted by the graphic controller 14.

The acoustic playback unit 18 includes the D/A converter 19, the amplifier 20 and the speaker 21. The D/A converter 19 converts the digital audio data supplied from the DVD-ROM drive 12a, the CD-ROM drive 12b or the RAM 9 via the bus line 10 into the analog signal. The amplifier 20 amplifies the analog audio signal outputted from the D/A converter 19, and the speaker 21 converts the analog audio signal thus amplified into an audible sound.

Next, the operation of the navigation apparatus will be roughly described. When the navigation apparatus S is powered, the system controller 5 reads out information necessary to access to the map data in the DVD-ROM disc DK1 or the CD-ROM disc DK2 and display information such as the current vehicle position mark, and stores them in the RAM 9. Then, the system controller 5 reads the output (i.e., detection signal of the vehicle speed pulse signal) of the travel distance sensor 3, and calculates the travel distance based on the output thus read. Then, the system controller 5 reads the output of the angular velocity sensor 2, and calculates the travelling direction of the vehicle based on the output thus read. Subsequently, the system controller 5 calculates the current vehicle position based on the travel distance data and the travel direction data. Then, the system controller 5 reads out the map information corresponding to the current vehicle position thus obtained from the DVD-disc DK1 or the CD-ROM disc DK2 and outputs it to the graphic controller 14 so that the map with the current position mark of the vehicle is shown on the display 17.

Simultaneously, the system controller 5 periodically corrects the data calculated by the travel distance sensor 3 and the angular velocity sensor 2 using the GPS measurement data from the GPS receiver 4, and renews the display position and the display direction of the current position mark and the map to be shown on the display 17. The travel distance data may be calculated, not from the output of the travel distance sensor 3, but from the output signal of the acceleration sensor 1.

### [II] Navigation processing:

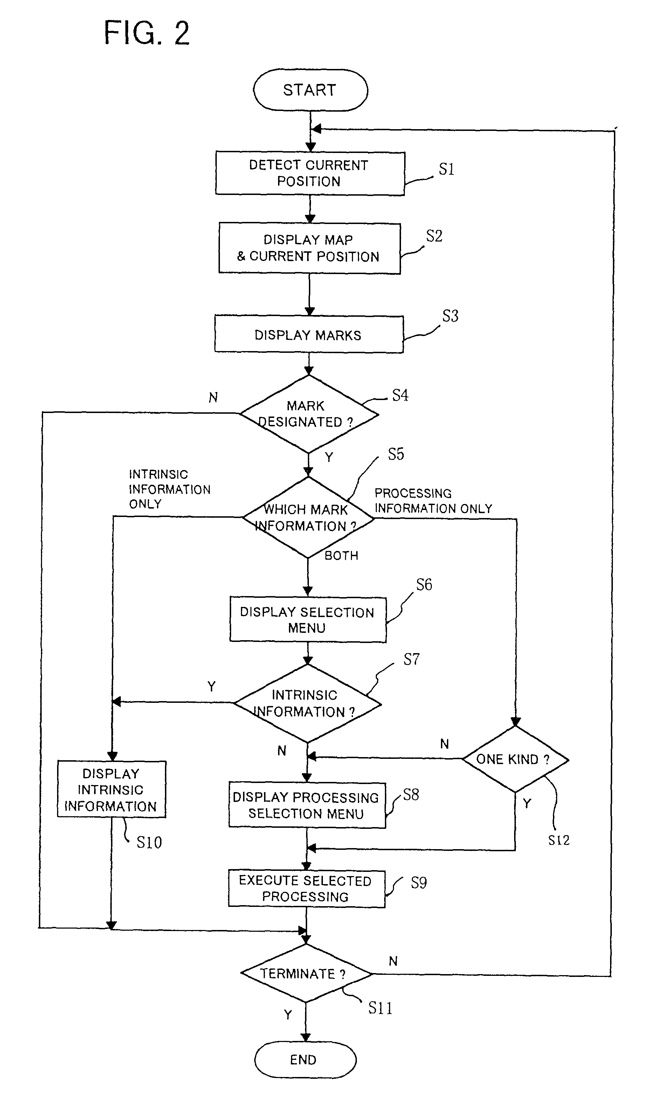

Next, an embodiment of the navigation processing according to the present invention will be described with reference to FIGS. 2 to 9. In the following embodiment, predetermined marks are displayed on the map shown on the display 17. Upon designating the mark, the navigation processing corresponding to the mark and set in advance begins.

As shown in FIG. 2, when the processing begins, the current vehicle position is detected based on the sensors such as the acceleration sensor 1 and the like (step S1). Then, the map data including the current position is read out from the DVD-ROM disc DK1 or the CD-ROM disc DK2, and the map data thus obtained is shown on the display 17 with the mark indicating the current position of the vehicle superimposed thereon (step S2). Then, other various marks (sometimes called as "pict") indicating restaurants, grocery stores, entrances to the expressway, etc. are superimposed on the map displayed (step S3).

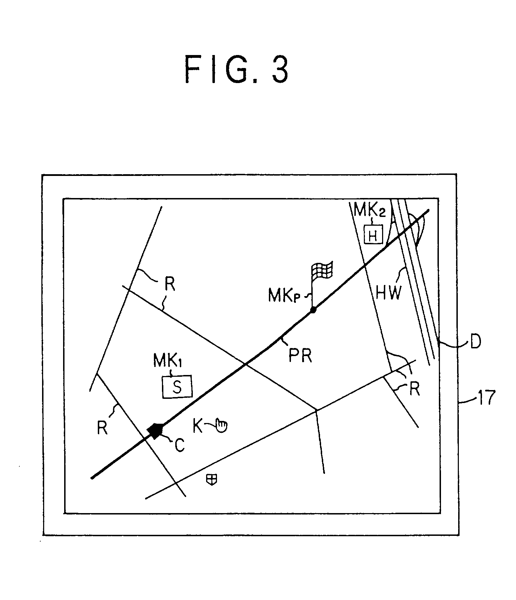

FIG. 3 is a diagram showing an example of the displayed map after step S3. In FIG. 3, the display screen D shows the road R, the expressway HW, the current vehicle position mark C on the preset route PR, and the mark MKp indicating the route point which the vehicle is scheduled to pass later. During the navigation processing, the current vehicle position mark C gradually approaches to the route point MKp in the speed corresponding to the actual vehicle speed, as the vehicle travels. The display screen D also includes the mark MK₁ indicating the shop and the mark MK₂ showing the entrance to the expressway. Further, the cursor K used to designate those marks in the processing described later is displayed. The cursor K is designed to freely move within the display screen D by the manipulation of the input device 10 such as a track ball or a joy stick and can be used for the designation processing described below (generally also called as "click processing").

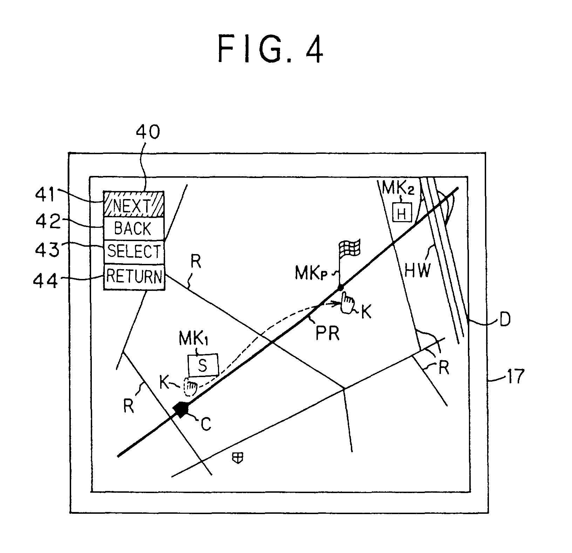

In the designation processing using the cursor K, alternatively to the use of the track ball in the input device 10, the menu 40 for the cursor manipulation, as shown in FIG. 4, may be displayed within the display screen D. In such a case, the user can manipulate the joy stick to move the cursor K on the screen D to designate the keys 41 to 44 of the menu 40, thereby designation processing for the marks may be performed in the predetermined order. Namely, every time when the key 41 is designated by the cursor K, one of the marks on the display screen is designated in the predetermined order. For example, if the key 41 is clicked by the cursor K when the mark MK₁ is designated, the designation of the mark automatically changes form the mark MK₁ to the mark MKp (see the broken arrow in FIG. 4), without the need of moving the cursor K by the hand of the user. Similarly, every time when the key 42 is clicked by the cursor K, one of the marks is selected in the order reverse to the above predetermined order. For example, if the key 42 is clicked by the cursor K during the designation of the mark MKp, the designation of the mark automatically changes from the designation of the mark MKp to the designation of the mark MK₁. In addition, the key 43 shown in FIG.4 is used display the image such as character information on the map, and the key 44 is used to exit the menu mode (i.e., delete the menu 40 from the display) and return to the ordinary navigation processing. Still further, alternatively to the designation processing using the menu 40, the navigation apparatus S may be provided with certain components for voice input. In that case, the designation may be performed by the user's uttering such as "Next" or "Forward", without the aid of the movement of the cursor K.

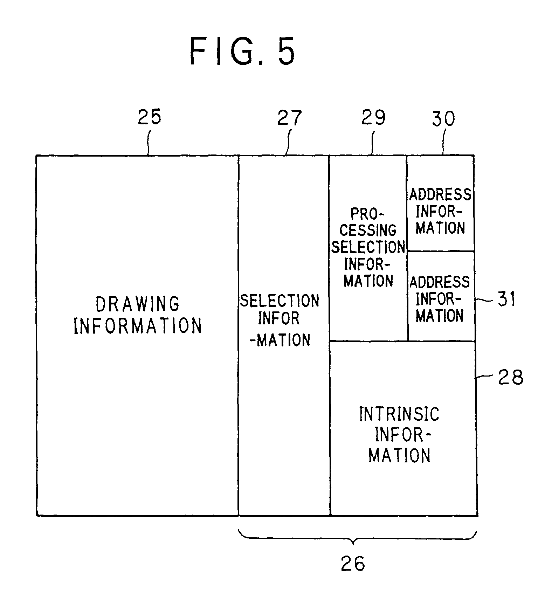

Next, the data structure for displaying the respective marks in step S3 will be described with reference to FIG. 5. As shown in FIG. 5, data necessary to display one mark includes drawing information 25, selection information 27, processing selection information 29, intrinsic information 28 and address information 30 and 31. The selection information 27, the processing selection information 29, the intrinsic information 28 and the address information 30 and 31 constitute mark information 26 corresponding to the subject mark. The drawing information 25 includes coordinate information indicative of the point on the map where the mark is drawn and color information and/or shape information necessary to draw the mark. The intrinsic information 28 includes character information relating to the buildings or the like which are indicated by the corresponding marks. For example, the intrinsic information 28 corresponding to the mark MK₁ indicating the grocery store includes character information which represents the business hours, the address, the phone number, goods on sale, etc. of the store. The intrinsic information 28 may includes the character information itself, or alternatively the address on the DVD-ROM disc DK1 or CD-ROM disc DK2 or RAM 9 where such character information is stored. The address information 30 and 31 include addresses on the DVD-ROM disc DK1 or CD-ROM disc DK2 or the ROM 8 where the program for the execution of the necessary processing associated with the mark is stored. If the data corresponding to the subject mark includes the intrinsic information 28 and the address information 30 (or 31), the selection information 27 includes information used to display the selection menu to select one of the intrinsic information 28 and the address information 30 (or 31) when the mark is designated by the cursor K. The processing selection information 29 includes information to display the selection menu with which the user selects one of the address information 30 and 31 to start the corresponding processing. In the data structure shown in FIG. 5, the drawing information 25 is required for all marks, but the mark information 26 such as the intrinsic information 28 and the address information 30 may be arbitrarily included.

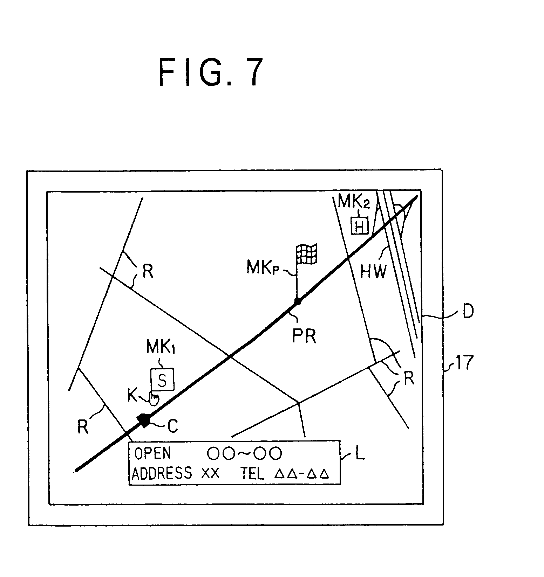

When the mark is displayed based on the data shown in FIG. 5 in step S3, then it is determined whether or not one of the marks is designated by the cursor K (step S4). If no mark is designated (step S4; No), then the process goes to step S11. If any one of the marks is designated (step S4; Yes), then the contents of the mark information 26 corresponding to the mark thus designated is judged (step S5). If the mark information 26 includes only the intrinsic information 28, the character information corresponding to the intrinsic information 28 is represented on the given position in the display screen D (step S10). Here, the image displayed in step S10 will be described in more detail by referring to FIG. 7. If the mark MK₁ corresponding to the grocery store in FIG. 3 is designated, for example, the character information L shown in FIG. 7, including the business hours, the address and the telephone number, is displayed as the intrinsic information 28. If the mark MK₂ indicating the entrance to the expressway shown in FIG. 3 is designated, the character information L including the fee of the expressway and the traffic information, for example, is displayed. After the intrinsic information 28 is displayed, the process goes to step S11.

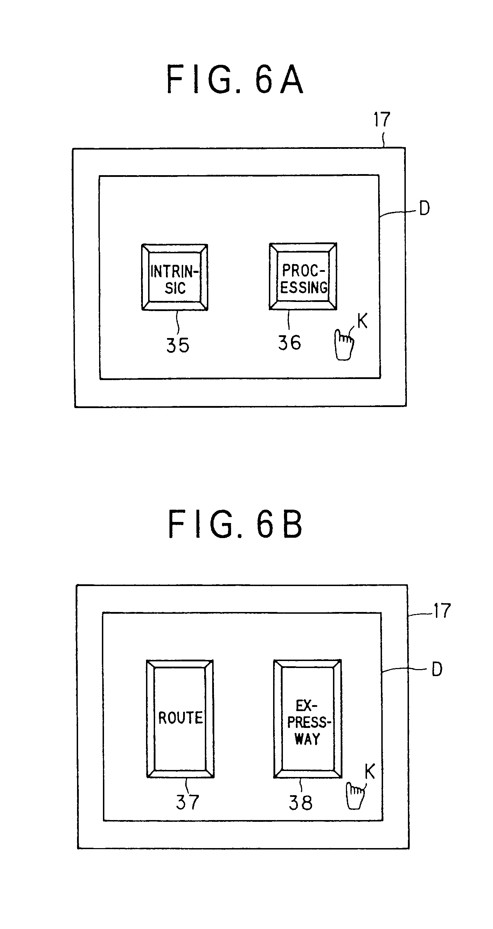

In the judgement in step S5, if the mark information 26 includes not only the intrinsic information 28 but the address information 30 (or 31) for the execution of the specific processing, then the selection menu for selecting one of the intrinsic information 28 and the address information 30 (or 31) is displayed, based on the selection information 27, on the given position on the display screen D (step S6). As an example of the selection menu, the button 35 for designating the intrinsic information 28 and the button 36 for designating the execution of the given processing are displayed as shown in FIG. 6A, and those buttons can be designated by the cursor K. Subsequently, it is determined whether or not the mark of the intrinsic information 28 (button 35) is designated on the selection menu displayed in step S6 (step S7). If Yes, the process goes to step S10 to display the intrinsic information as described above. If the execution of the given processing (corresponding to the button 36) is instructed (step S7; No), then the selection menu for selecting one of the address information 30 and 31 is displayed on the given position on the display screen D based on the processing selection information 29 (step S8). As an example of the selection menu, the button 37 for executing the route scroll processing and the button 38 for executing the expressway mode processing are displayed as shown in FIG. 6B, and those buttons can be designated by the cursor K. The example shown in FIG. 6B shows the case where the mark information 26 corresponding to the mark designated in step S4 includes two address information 30 and 31 corresponding to different processing (i.e., the route scroll processing and the expressway mode processing in the example of FIG. 6B). If more than two processing are prepared in the mark information 26, the buttons of corresponding number are displayed. If only one processing is prepared as the mark information, only one button is displayed.

When the selection menu is displayed in step S8, then the program corresponding to the processing designated on the selection menu is read out from the DVD-ROM disc DK1 or the CD-ROM disc DK2 or the ROM 8 by referring to the address information 30 or 31, and executed. The route scroll processing and the expressway mode processing shown in FIG. 6B will be described later in detail.

When the processing is executed in step S9, then it is determined whether or not the navigation processing should be terminated (step S11). If No, the process returns to step S1 to repeat the above process. If step S11 results in Yes, then the process ends.

In the judgement in step S5, if the mark information 26 includes only the processing selection information 29 and the address information 30 or 31, it is determined whether or not the processing is only one kind (step S12). If Yes, the process goes to step S9. If no, the process goes to step S8 to display the buttons of the corresponding number to enable the selection of the processing to be executed.

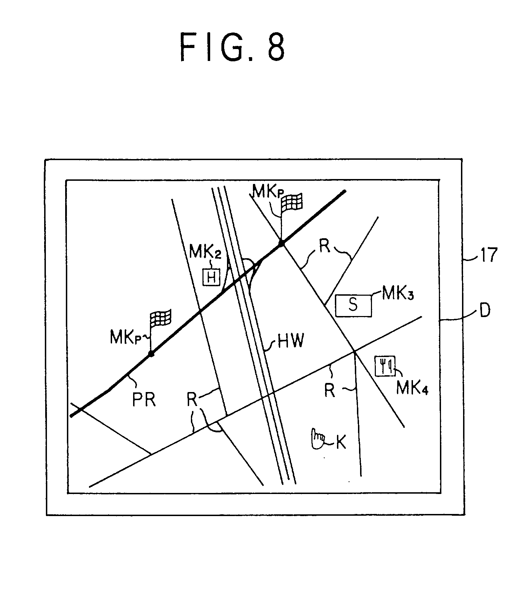

Next, the outline of the route scroll processing referred to in FIG. 6B will be described with reference to FIGS. 3 and 8. As mentioned above, the route scroll processing is to automatically scroll the map along the preset route PR to display the condition of the preset route PR which the vehicle is scheduled to drive, when the preset route PR is determined in advance. If the route scroll processing begins with the map including the current position of the vehicle as shown in FIG. 3, the map is scrolled along the preset route PR to show the area where the vehicle will pass by as shown in FIG. 8. In the example shown in FIG. 8, the newly appeared portion of the map includes the mark MKp which indicates the next route point and will come into the sight of the driver after passing the expressway HW, the mark MK₃ of the grocery store which came into the displayed zone by the scroll, and the mark MK₄ indicating the restaurant. Preferably, the mark information 26 for the execution of the route scroll processing is set in correspondence with the marks MKp of the respective route points on the preset route PR so that the route scroll processing can be started by designating the mark MKp of the route point.

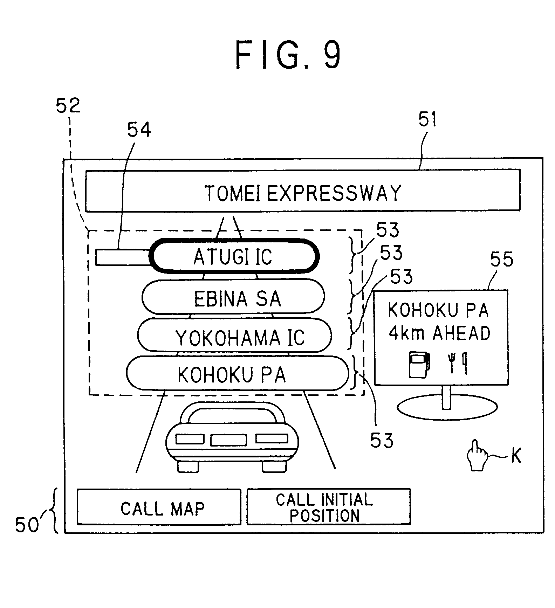

Next, the outline of the expressway mode processing referred to in FIG. 6B will be described with reference to FIGS. 3 and 9. As mentioned above, the expressway mode processing is to display the expressway in a manner different from that of the normal roads to distinguish the expressway from the normal roads. When the expressway mode processing begins, the display 17 shows the image as shown in FIG. 9, and the image including normal roads like FIG. 3 is not shown any more. The display image in the expressway mode processing includes, as shown in FIG. 9, the key guide 51 which is the message area for inputting commands and shown like the shape of key switches. Further, the route name of the expressway is displayed in the route name display area 51, and the service area and/or the interchange is displayed in the areas 53 in the area 52. If there is a junction in the interchange, it is displayed as the junction symbol 54. The area 55 displays the detailed information such as the nearest service area. Preferably, the mark information 26 for executing the expressway mode processing is set in correspondence with the mark MK₂ indicating the entrance to the subject expressway so that the driver can grasp the condition of the expressway before the entering.

If the expressway is set in the preset route PR, two buttons corresponding to the mark MK₂, as shown in FIG. 6B, may be displayed to allow the user to select one of them. In such a case, it is necessary to prepare the processing selection information 29 and the address information 30 (or 31) according to the presence or absence of the preset route.

As described above, according to the processing of the navigation apparatus S, the mark including the mark information 26 is shown at the appropriate position on the map to execute the corresponding processing based on the mark information 26 of the designated mark. Therefore, the operation to execute those processing may be simplified. Further, when the mark is designated, the button 35 or 36 is displayed based on the mark information 26 of the designated mark to start the given processing selected by the designation of the button 35 or 36. Therefore, the operation before the selection and start of the given processing may be simplified.

The above description is directed to the case where the mark information 26 includes the intrinsic information 28 and the address information 30 for executing the predetermined processing. However, the mark including only the processing selection information 29 and the address information 30, but no intrinsic information 28, may be prepared so that the given processing such as the route scroll processing may be immediately started when the mark is designated by the cursor K. In that case, the mark information 26 instructs the start of the given processing and, when the mark is designated, the processing corresponding to the mark information 26 of the designated mark is started, thereby simplifying the operation before starting the processing.

## Claims

1. A display control device (5, 16) for use in a vehicle navigation apparatus (S) comprising:
a map display means (5,13) for displaying a map on a display device;
a mark display means (5 13) for displaying marks (MK) on the map displayed on the display device, said mark being associated with mark information (26) necessary for executing preset processing in a vehicle navigation processing;
a designation means (11) for designating the mark displayed on the display device; and
an execution means (5) for executing the preset processing based on the mark information associated with the mark designated by the designation means,
said mark information corresponds to a plurality of preset processing associated with the designated mark, **characterized in that**
each of the plurality of preset processing corresponds to one of a plurality of functions different from each other, said device further comprising a selection information display means (5, 13) for displaying selection information (27) to select one of the plurality of preset processing, said execution means starting the preset processing selected based on the selection information.

2. A display control device according to claim 1, wherein said mark information includes information to start the preset processing, and said execution means starts the preset processing upon designation of the mark information.

3. A display control device according to any one of claims 1 and 2 further comprising a route display means (5, 13) for displaying a route (PR) which the vehicle is scheduled to travel on the display device, said mark information including information to display the mark on the position on the route and to execute processing associated with the route.

4. A display control device according to any one of claims 1 and 2, wherein said vehicle comprises an automobile, said device further comprising an expressway displaying means (5, 13) for displaying an expressway on the display device, said mark comprising an expressway entrance mark (MK₂) indicating an entrance to the expressway and being displayed at the position corresponding to the entrance of the expressway on the map displayed on the display device, said preset processing corresponding to the expressway entrance mark comprising processing to switch an expressway running display showing information of the expressway and a normal road display showing map with normal roads.

5. A display control device according to claim 4, wherein said expressway running display showing information associated with the expressway, including at least the name (51) of the expressway and the parking areas and/or the interchanges ahead (52),

6. A display control device according to any one of claims 1 to 5 wherein said designation means comprises a cursor display means for display a cursor (K), and a cursor operating means for moving the cursor on the display and clicking the mark to designate the mark.

7. A display control method for use in a vehicle navigation apparatus (S) comprising the steps of:
displaying a map on a display device;
displaying marks (MK) on the map displayed on the display device, said mark being associated with mark information (26) necessary for executing preset processing in a vehicle navigation processing;
designating the mark displayed on the display device; and
executing the preset processing based on the mark information associated with the mark designated by the designating step, said mark information corresponds to a plurality of preset processing associated with the designated mark
**characterized in that**
each of the plurality of preset processing corresponds to one of a plurality of functions different from each other, said device further comprising a selection information display means (5, 13) for displaying selection information (27) to select one of the plurality of preset processing, said execution means starting the preset processing selected based on the selection information.

8. A display control method according to claim 7, wherein said mark information includes information to start the preset processing, and said executing step starts the preset processing upon designation of the mark information.

## Patentansprüche

1. Anzeigesteuerungsvorrichtung (5, 16) zur Verwendung in einem Fahrzeugnavigationsgerät (S), mit
einer Kartenanzeigeeinrichtung (5, 13) zum Anzeigen einer Karte auf einer Anzeigevorrichtung;
einer Markierungsanzeigeeinrichtung (5, 13) zum Anzeigen von Markierungen (MK) auf der auf der Anzeigevorrichtung angezeigten Karte, wobei die Markierungen mit Markierungsinformationen (26) verbunden sind, die zur Ausführung eines Initialisierungsprozesses bei einem Fahrzeugnavigationsprozess erforderlich sind;
einer Kennzeichnungseinrichtung (11) zum Kennzeichnen der auf der Anzeigevorrichtung angezeigten Markierung; und
einer Ausführungseinrichtung (5) zum Ausführen des Initialisierungsprozesses basierend auf den Markierungsinformationen, die mit der durch die Kennzeichnungseinrichtung gekennzeichneten Markierung verbunden sind,
wobei die Markierungsinformationen mehreren Initialisierungsprozessen entsprechen, die mit der gekennzeichneten Markierung verbunden sind,
**dadurch gekennzeichnet,**
**dass** jeder der mehreren Initialisierungsprozesse einer von mehreren zueinander unterschiedlichen Funktionen entspricht, wobei die Vorrichtung weiter eine Auswahlinformationsanzeigeeinrichtung (5, 13) zum Anzeigen von Auswahlinformationen (27) aufweist, um einen der mehreren Initialisierungsprozesse auszuwählen, wobei die Ausführungseinrichtung den Initialisierungsprozess startet, der basierend auf den Auswahlinformationen ausgewählt wurde.

2. Anzeigesteuerungsvorrichtung nach Anspruch 1, wobei die Markierungsinformationen Informationen zum Starten des Initialisierungsprozesses enthalten, und die Ausführungseinrichtung den Initialisierungsprozess bei der Kennzeichnung der Markierungsinformationen startet.

3. Anzeigesteuerungsvorrichtung nach Anspruch 1 oder 2, weiter mit einer Routenanzeigeeinrichtung (5, 13) zum Anzeigen einer Route (PR), die das Fahrzeug fahren soll, auf der Anzeigevorrichtung, wobei die Markierungsinformationen Informationen enthalten, um die Markierung an der Stelle an der Route anzuzeigen und die mit der Route verbundene Verarbeitung auszuführen.

4. Anzeigesteuerungsvorrichtung. nach Anspruch 1 oder 2, wobei das Fahrzeug ein Kraftfahrzeug ist und die Vorrichtung weiter eine Schnellstraßenanzeigeeinrichtung (5, 13) zum Anzeigen einer Schnellstraße auf der Anzeigevorrichtung aufweist, wobei die Markierung eine Schnellstraßenauffahrtsmarkierung (MK₂) aufweist, die eine Auffahrt der Schnellstraße anzeigt, und an der Stelle entsprechend der Auffahrt der Schnellstraße auf der auf der Anzeigevorrichtung angezeigten Karte angezeigt wird, wobei der der Schnellstraßenauffahrtmarkierung entsprechende Initialisierungsprozess eine Verarbeitung aufweist, um eine Informationen der Schnellstraße zeigende Schnellstraßenanzeige und eine eine Karte mit normalen Straßen zeigende Normalstraßenanzeige zu schalten.

5. Anzeigesteuerungsvorrichtung nach Anspruch 4, wobei die Schnellstraßenanzeige zu der Schnellstraße gehörende Informationen zeigt, einschließlich wenigstens des Namens (51) der Schnellstraße und der voraus liegenden Parkbereiche und/oder Kreuzungen.

6. Anzeigesteuerungsvorrichtung nach einem der Ansprüche 1 bis 5, wobei die Kennzeichnungseinrichtung eine Cursoranzeigeeinrichtung zum Anzeigen eines Cursors (K) und eine Cursorbetätigungseinrichtung zum Bewegen des Cursors auf der Anzeige und Anklicken der Markierung, um die Markierung zu kennzeichnen, aufweist.

7. Anzeigesteuerungsverfahren zur Verwendung in einem Fahrzeugnavigationsgerät (S), mit den Verfahrensschritten:
Anzeigen einer Karte auf einer Anzeigevorrichtung;
Anzeigen von Markierungen (MK) auf der auf der Anzeigevorrichtung angezeigten Karte, wobei die Markierungen mit Markierungsinformationen (26) verbunden sind, die zur Ausführung eines Initialisierungsprozesses bei einem Fahrzeugnavigationsprozess erforderlich sind;
Kennzeichnen der auf der Anzeigevorrichtung angezeigten Markierung; und
Ausführen des Initialisierungsprozesses basierend auf den Markierungsinformationen, die mit der durch den Kennzeichnungsschritt gekennzeichneten Markierung verbunden sind, wobei die Markierungsinformationen mehreren Initialisierungsprozessen entsprechen, die mit der gekennzeichneten Markierung verbunden sind,
**dadurch gekennzeichnet,**
**dass** jeder der mehreren Initialisierungsprozesse einer von mehreren zueinander unterschiedlichen Funktionen entspricht, wobei die Vorrichtung weiter eine Auswahlinformationsanzeigeeinrichtung (5, 13) zum Anzeigen von Auswahlinformationen (27) aufweist, um einen der mehreren Initialisierungsprozesse auszuwählen, wobei die Ausführungseinrichtung den Initialisierungsprozess startet, der basierend auf den Auswahlinformationen ausgewählt wurde.

8. Anzeigesteuerungsvorrichtung nach Anspruch 7,
wobei die Markierungsinformationen Informationen zum Starten des Initialisierungsprozesses beinhaltet, und der Ausführungsschritt den Initialisierungsschritt bei der Kennzeichnung der Markierungsinformationen startet.

## Revendications

1. Un dispositif de commande de visualisation (5, 16) pour l'utilisation dans un appareil de navigation (S) pour véhicule, comprenant :
un moyen de visualisation de carte (5, 13) pour visualiser une carte sur un dispositif de visualisation;
un moyen de visualisation de marques (5, 13) pour visualiser des marques (MK) sur la carte visualisée sur le dispositif de visualisation, cette marque étant associée à une information de marque (26) nécessaire pour exécuter un traitement fixé à l'avance dans un traitement de navigation pour véhicule;
un moyen de désignation (11) pour désigner la marque visualisée sur le dispositif de visualisation; et
un moyen d'exécution (5) pour exécuter le traitement fixé à l'avance, sur la base de l'information de marque associée à la marque désignée par le moyen de désignation,
l'information de marque correspondant à une multiplicité de traitements fixés à l'avance, associés à la marque désignée, **caractérisé en ce que**
chacun de la multiplicité de traitements fixés à l'avance correspond à l'une d'une multiplicité de fonctions mutuellement différentes, ce dispositif comprenant en outre un moyen de visualisation d'information de sélection (5, 13) pour visualiser une information de sélection (27) pour sélectionner l'un de la multiplicité de traitements fixés à l'avance, le moyen d'exécution commençant le traitement fixé à l'avance sélectionné sur la base de l'information de sélection.

2. Un dispositif de commande de visualisation selon la revendication 1, dans lequel l'information de marque comprend une information pour commencer le traitement fixé à l'avance, et le moyen d'exécution commence le traitement fixé à l'avance sous l'effet de la désignation de l'information de marque.

3. Un dispositif de commande de visualisation selon l'une quelconque des revendications 1 et 2, comprenant en outre un moyen de visualisation d'itinéraire (5, 13) pour visualiser sur le dispositif de visualisation un itinéraire (PR) programmé pour le déplacement du véhicule, l'information de marque incluant une information pour visualiser la marque sur la position sur l'itinéraire et pour exécuter un traitement associé à l'itinéraire.

4. Un dispositif de commande de visualisation selon l'une quelconque des revendications 1 et 2, dans lequel le véhicule est une automobile, le dispositif comprenant en outre un moyen de visualisation d'autoroute (5, 13) pour visualiser une autoroute sur le dispositif de visualisation, la marque consistant en une marque d'entrée d'autoroute (MK₂) indiquant une entrée de l'autoroute et étant visualisée à la position correspondant à l'entrée de l'autoroute sur la carte visualisée sur le dispositif de visualisation, le traitement fixé à l'avance correspondant à la marque d'entrée d'autoroute comprenant un traitement pour commuter entre une visualisation de circulation sur autoroute montrant de l'information relative à l'autoroute, et une visualisation de routes normales montrant une carte avec des routes normales.

5. Un dispositif de commande de visualisation selon la revendication 4, dans lequel la visualisation de circulation sur autoroute montre de l'information associée à l'autoroute, incluant au moins le nom (51) de l'autoroute et les prochains échangeurs et/ou aires de stationnement (52).

6. Un dispositif de commande de visualisation selon l'une quelconque des revendications 1 à 5, dans lequel le moyen de désignation comprend un moyen de visualisation de curseur pour visualiser un curseur (K), et un moyen d'actionnement de curseur pour déplacer le curseur sur la visualisation et pour cliquer sur la marque pour désigner la marque.

7. Un procédé de commande de visualisation pour l'utilisation dans un appareil de navigation (S) pour véhicule, comprenant les étapes suivantes :
on visualise une carte sur un dispositif de visualisation;
on visualise des marques (MK) sur la carte visualisée sur le dispositif de visualisation, cette marque étant associée à une information de marque (26) nécessaire pour exécuter un traitement fixé à l'avance dans un traitement de navigation pour véhicule;
on désigne la marque visualisée sur le dispositif de visualisation; et
on exécute le traitement fixé à l'avance sur la base de l'information de marque associée à la marque désignée par l'étape de désignation, l'information de marque correspondant à une multiplicité de traitements fixés à l'avance associés à la marque désignée, **caractérisé en ce que**
chacun de la multiplicité de traitements fixés à l'avance correspond à l'une d'une multiplicité de fonctions mutuellement différentes, le dispositif comprenant en outre un moyen de visualisation d'information de sélection (5, 13) pour visualiser une information de sélection (27) pour sélectionner l'un de la multiplicité de traitements fixés à l'avance, le moyen d'exécution commençant le traitement fixé à l'avance sélectionné sur la base de l'information de sélection.

8. Dispositif de commande de visualisation selon la revendication 7, l'information de marque comprenant une information pour commencer le traitement fixé à l'avance, et le moyen d'exécution commençant le traitement fixé à l'avance sous l'effet de la désignation de l'information de marque.
